## Europäisches Patentamt

## European Patent Office

## Office européen des brevets

(19)

(11) Veröffentlichungsnummer: **0 134 486**
**B1**

(12) **EUROPÄISCHE PATENTSCHRIFT**

(45) Veröffentlichungstag der Patentschrift:
**05.08.87**

(21) Anmeldenummer: **84108050.0**

(22) Anmeldetag: **10.07.84**

(51) Int. Cl.⁴: **F 16 K 11/06,** F 15 B 13/07,
G 05 B 19/44

(54) **Pneumatischer Schrittschalter.**

(30) Priorität: **20.07.83 DE 3326134**

(43) Veröffentlichungstag der Anmeldung:
**20.03.85 Patentblatt 85/12**

(45) Bekanntmachung des Hinweises auf die Patenterteilung:
**05.08.87 Patentblatt 87/32**

(84) Benannte Vertragsstaaten:
**CH DE FR GB IT LI NL SE**

(56) Entgegenhaltungen:
**CH - A - 533 264**
**DE - A - 1 906 944**
**DE - A - 1 937 690**
**DE - A - 2 722 363**
**DE - A - 2 722 363**
**FR - A - 2 061 335**
**US - A - 3 008 490**
**US - A - 3 620 253**
**US - A - 4 310 022**

(73) Patentinhaber: **J. Hengstler K.G., Uhlandstrasse 49,
D-7209 Aldingen - 1 (DE)**
Patentinhaber: **Festo KG, Ruiter Strasse 82,
D-7300 Esslingen 1 (DE)**

(72) Erfinder: **Trittler, Karl, Kantstrasse 28,
D-7209 Aldingen 1 (DE)**

(74) Vertreter: **Hubbuch, Helmut, Dipl.-Ing, Patentanwälte Dr.
Rudolf Bauer Dipl.-Ing. Helmut Hubbuch Dipl.-Phys.
Ulrich Twelmeier Westliche
Karl-Friedrich-Strasse 29-31, D-7530 Pforzheim (DE)**

## Beschreibung

Die Erfindung bezieht sich auf einen pneumatisch betriebenen Schrittschalter nach dem Oberbegriff von Anspruch 1.

Schrittweise schaltende Selektierventile dieser Art werden beispielsweise bei der Automatisierung von pneumatisierten Vorgängen verwendet, wobei diese in der vorgeschriebenen Reihenfolge ablaufen müssen. Dabei ist es zweckmässig, den jeweils nächsten Programmschritt oder Vorgang erst dann auszulösen, wenn der vorangegangene Vorgang beendet und mittels Quittiersignal bestätigt ist.

Zum Einrichten solcher automatisierten Steuerungen sind auch manuelle Eingriffe erforderlich, die beispielsweise nur Einzelschritte auslösen, oder um Programmabschnitte zu wiederholen, durchzuschalten sind. Auch sind Stellungsanzeigen in solchen Mitteln bekannt, welche die jeweilige Schaltposition anzeigen, um den Überblick beim Einrichten von Ablaufprogrammen zu gewährleisten.

Es sind z.B. nach der DE-A-1 906 944 Verfahren und Einrichtungen bekannt, zur automatischen sequentiellen Steuerung aufeinanderfolgender Vorgänge bei pneumatischen Steuerungen. Diese werden aus einer Vielzahl von pneumatischen steuerbaren Schalt- und Logikelementen aufgebaut, die zwar auf den jeweiligen Anwendungsfall exakt zugeschnitten werden können, aber sehr aufwendig und teuer sind. Ausserdem beanspruchen solche Schrittsteuerungen viel Raum und erfordern zum Konzipieren Kenntnisse und Erfahrungen im Aufbau und der Dimensionierung solcher Steuerungen.

Ausserdem sind z.B. nach der DE-A-1 937 690 auch Selektierventile bekannt, die zur automatischen Steuerung aufeinanderfolgender Vorgänge dienen und als kompakte Einheiten aufgebaut sind. Diese bekannten Selektierventile sind sehr aufwendig und teuer, aus Metallteilen gefertigt, so dass deren hohe Kosten einer breiteren Anwendung entgegensteht. Auch wird bei diesen bekannten Einrichtungen eine scheibenförmige Verteileranordnung verwendet, wobei die Dichtflächen zur Abdichtung mittels Federn zusammengepresst werden, wodurch sich hohe Schaltkräfte zu deren Fortschaltung ergeben und ein entsprechender Aufwand für die dafür notwendigen Fortschaltmittel erforderlich sind. Überdies ist bei diesen bekannten Einrichtungen die sperrige Bauweise und ein verhältnismässig grosser Aufwand für die funktionsfähige Eigensteuerung nachteilig.

Aufgabe der Erfindung ist demgegenüber einen Schrittschalter zu schaffen, welcher vorzugsweise in Kunststoff zu fertigen ist, wodurch an sich mit vielen Bohrungen und Verbindungskanälen versehene Teile kostengünstig zu realisieren sind. Durch eine konsequente Bauweise mit Kunststoff-Fertiggussteilen können alle sonst notwendigen Leitungsverbindungen in den Bauteilen integriert werden, so dass sich erhebliche Kosteneinsparungen ergeben, bei gleichzeitiger Verbesserung der Funktionssicherheit.

Diese Aufgabe wird gemäss der Erfindung bei einem pneumatischen Schrittschalter nach dem Oberbegriff des Anspruchs 1 dadurch gelöst, dass sich im Grundkörper teilweise offene Kanäle befinden, die mit Druckplatten dicht verschlossen sind und der Grundkörper durch Kugeln verschlossene Winkelbohrungen aufweist und dass der Verteilerscheibe, welche radiale Entlüftungsnuten für diejenigen Ausgänge aufweist, welche nicht mit der Sammelleitung in Verbindung geschaltet sind, ein Dichtkolben folgt, welcher über die Verteilerscheibe die in den eingehenden Durchgängen eingebauten federbelasteten Ventilstössel abhebt, ausgewählte Durchgänge verschliesst und im drucklosen Zustand von den Ventilfedern abgehoben, die Verteilerscheibe zur schrittweisen Weiterschaltung freigibt. Somit ist bei der erfindungsgemässen Ausführung die Verteileranordnung in der Fortschaltphase unbelastet und deshalb frei beweglich, wodurch die Schaltkräfte wesentlich reduziert werden, was sich günstig auf die Schaltmechanismen auswirkt, kostengünstigere Lösungen erlaubt, bei höheren Schaltgeschwindigkeiten und Lebensdauer, was noch durch die Möglichkeit der Ausführung in Kunststoff erhöht wird.

Durch in diesem Zusammenhang notwendige federbelastete Ventilstössel, welche von der Verteilerscheibe direkt gesteuert sind, verhindern einen zu grossen Luftverlust während der Fortschaltphase.

Schliesslich sind alle Ein- und Ausgangsanschlüsse und die Luftversorgung auf nur eine Seite geführt und enden in vergrösserten Bohrungen, die abgestimmt auf Steckverbinder-Elemente, die in einem Stecksockel gehalten sind, Schlauchanschlüsse aufweisen und mit Befestigungsmitteln für Halteschienen versehen sind. Dadurch kann der Schrittschalter bei belassener Verschlauchung am Stecksockel aufgesteckt oder abgezogen und auch im Störungsfall ausgetauscht werden.

Ein pneumatischer Schrittschalter gemäss der Erfindung wird anhand der Zeichnungen als bevorzugte Ausführungsform nachfolgend näher erläutert und zwar zeigen:

Fig. 1 ein Funktionsschaltbild der Gesamtanordnung,

Fig. 2 eine Schnittdarstellung des Schrittschalters,

Fig. 3 eine Draufsicht auf den Grundkörper,

Fig. 4 einen Schnitt durch den Grundkörper mit Verteilerscheibe und Zuleitungen,

Fig. 5 eine Prinzipdarstellung der Hebelmechanik mit Bedienteilen und Rückstellung,

Fig. 6 eine Prinzipdarstellung der weiteren Hebelmechanik mit Bedienteilen zur Fortschaltung.

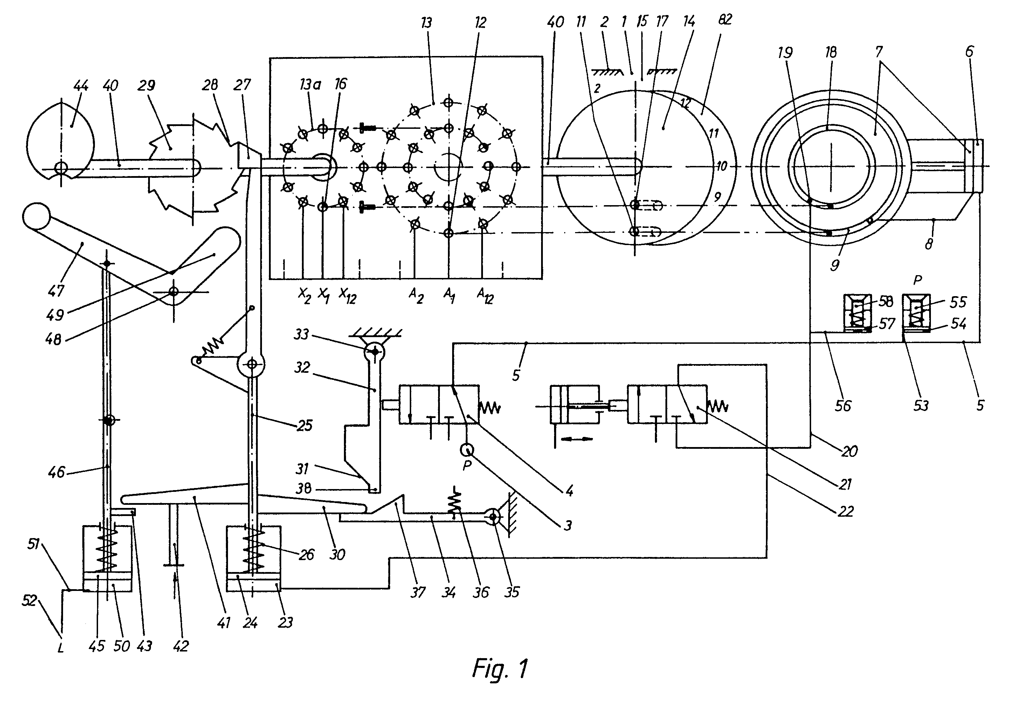

In Fig. 1 sind die gesamte Funktion und die Luftwege anhand eines Schaltbildes näher erläutert, dabei ist die Schaltstellung 1 im Fenster 2 bei am P-Anschluss 3 anstehendem Druck dargestellt. Über das offene Ventil 4 wird die Luft mittels Leitung 5 zum Zylinderraum 6 des Dichtkolbens 7 geführt und dieser abdichtend gegen die Verteilerscheibe 14 gepresst. Gleichzeitig wird die Luft durch die Leitung 8 über die Ringnut 9, die Leitung 10 und dem Durchgang 11 an den $A_1$-Ausgang 12 des grossen Verteilerkreises 13 geführt.

Abhängig von der Stellung der Verteilerscheibe 14 und durch Ziffernaufdruck 15 im Ablesefenster 2 sichtbar, befindet sich der Durchgang 11 in Übereinstimmung mit dem $A_1$-Ausgang 12, über welchen ein Verbraucher versorgt werden kann, bis der dadurch zu steuernde Vorgang beendet und mittels Quittiersignal gemeldet ist. Dieses Quittiersignal am $X_1$-Eingang 16 bewirkt nun den nachfolgenden Schaltvorgang. Bei durch angepresstem Dichtkolben 7 abgedichteter Verteilerscheibe 14 ist dessen Durchgang 17 offen, in die innere Ringnut 18. Das Signal führt über den Durchgang 19, in die Leitung 20 zum Start/Stop Ventil 21 und bei dessen Stellung «Start» weiter über die Leitung 22 zum Fortschaltzylinder 23, dessen Kolben 24 betätigt wird.

Der betätige Kolben 24 schaltet nun über das Zwischenglied 25 bei sich vorspannender Feder 26 die Schaltklinke 27 in die nächste Zahnlücke 28 des Schaltrades 29. Der am Zwischenglied 25 befindliche Nocken 30 trifft während des Aufzugweges auf die Schrägung 31 des Hebels 32, welcher um den Lagerpunkt 33 schwenkend das Ventil 4 betätigt um die P-Luftversorgung 3 abzuschalten. Die Rastklinke 34 ist im Drehpunkt 35 schwenkbar gelagert und verschwenkt unter Wirkung der Feder 36 mit dem sich verschiebenden Nocken 30 und rastet mit einer Rastkante 37 hinter die Nase 38 des Hebels 32. Dadurch wird sichergestellt, dass die Unterbrechung der P-Luftversorgung 3 wirksam ist, bis infolge entlüftetem Fortschaltzylinder 23 und Dichtkolben 7 der Fortschaltkolben 24 durch die Feder 26 in die Ausgangsstellung zurückkehrt. Dabei schaltet die Schaltklinke 27 das Schaltrad 29 und die über das Kupplungsrohr 40 verbundene Verteilerscheibe 14 um einen Schritt weiter. Durch den in die Ausgangsstellung zurückschaltenden Fortschaltkolben 24 hebt der Nocken 30 kurz vor der Endstellung die Rastklinke 34 wieder aus und gibt bei verlassen der Nase 38 den Hebel 32 frei, wodurch das Ventil 4 öffnet. Dadurch ist der Beginn eines neuen Funktionszyklus wieder erreicht. Werden beispielsweise ohne zwischengeschalteten Verbraucher mit beliebigem Vorgang, die Ausgänge 12 mit den jeweiligen Eingängen 16 direkt verbunden, so schaltet der Schrittschalter fortlaufend weiter. Dem Zwischenglied 25 ist ein weiterer Nocken 41 zugeordnet, welcher mittels Taste 42 die manuelle Fortschaltung des Schaltrades 29 ermöglicht. Auf diesen Nocken 41 wirkt der Mitnehmer 43 zur Rückstellung des Schaltrades 29 und der mittels Kupplungsrohr 40 verbundenen Verteilerscheibe 14, wobei eine an sich bekannte Herzkurve 44 verbunden mit dem Kupplungsrohr 40 dient.

Der Rückstellkolben 45 schaltet mittels dem Zwischenglied 46 auf den Rückstellhebel 47 der um den Lagerpunkt 48 verschwenkt rückstellend auf die Herzkurve 44 wirkt. Der mit dem Rückstellhebel 47 verbundene Hebelarm 49 bringt zur Rückstellung die Schaltklinke 27 ausser Eingriff damit eine rückstellende Drehung entgegen der Schaltrichtung ermöglicht wird. Der Rückstellzylinder 50 besitzt eine eigene Leitung 51 zum L-Anschluss 52. An der Leitung 5 ist über den Anschluss 53 eine Druckanzeige in Form eines Zylinders 54 mit federbelastetem Anzeigekolben 55 angeordnet, welcher (55) bei anstehendem Druck zur Anzeige ausgefahren ist. Des weiteren ist an der Leitung 20 über den Anschluss 56 eine Druckanzeige ebenfalls in Form eines Zylinders 57 mit federbelastetem Anzeigekolben 58 angeordnet, welcher (58) bei anstehendem Druck zur Anzeige ausgefahren ist. Hierbei sind die beiden Kolben 55 und 58 farblich unterschiedlich gekennzeichnet.

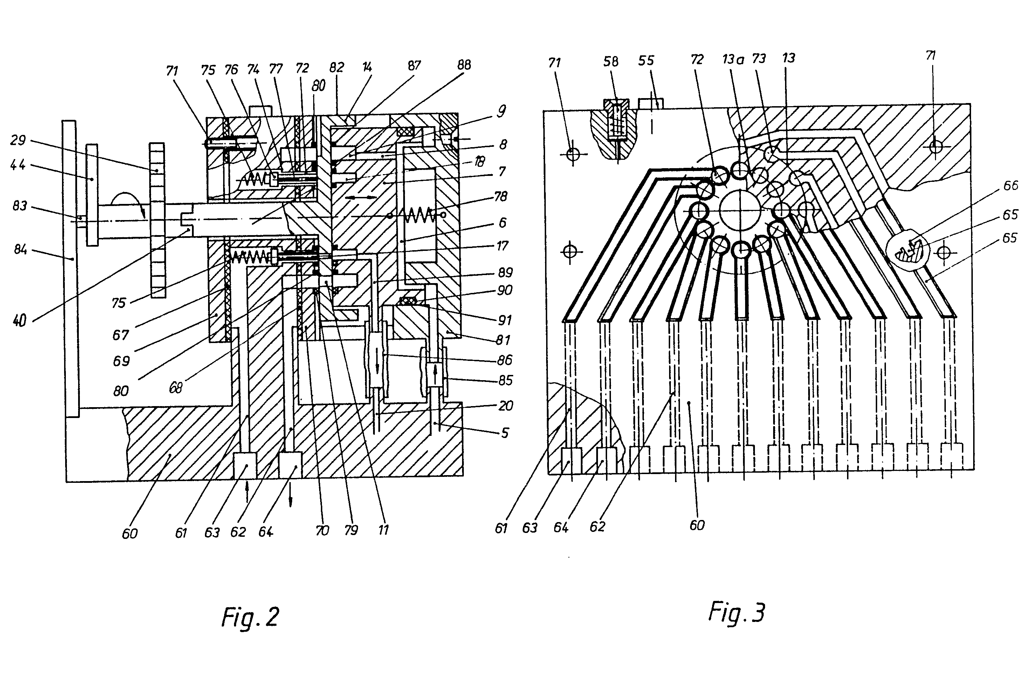

In den weiteren Figuren 2 bis 6 werden nun Details der technischen Ausführung näher erläutert, dabei zeigt Fig. 2 und 3 einen in Kuststoff gefertigten Grundkörper 60 mit einer Vielzahl von Anschlussbohrungen 61 und 62 mit Ansatzbohrungen 63 und 64 zur steckbaren Anschlussverbindung, wie später näher erläutert wird. Die Anschlussbohrungen 61 und 62 gehen beidseitig im oberen Bereich des Grundkörpers 60 in seitlich ausgeformte Kanäle 65 über zur Anschlussverbindung in die Verteilerkreise 13 und 13a. Zur sicheren Abdichtung der Kanäle 65 sind diese jeweils mit umlaufendem Dichtwulst 66 versehen. Die beidseitige Abdichtung der Kanäle 65 erfolgt durch Dichtungsplatten 67 und 68, die zwischen Druckplatten 69 und 70 liegend mittels Schrauben 71 gehalten sind. In den Verteilerkreisen 13 und 13a münden die Kanäle 65 direkt in Bohrungen 72 und 73 ein, wobei die Bohrungen 72 einen Dichtungsansatz 74 aufweisen, der mittels durch Druckfedern 75 belasteten Ventilstössel 76 verschliessbar ist. Diese Ventilstössel 76 enthalten einen luftdurchlässig profilierten Führungsschaft 77, der länger als die Bohrung 72 ist, bei angepresstem Dichtkolben 7 öffnet und bei drucklosem Zustand durch die Zugfedern 78 abgehobenem Dichtkolben 7 am Dichtansatz 74 abdichtet.

Zur Abdichtung der Verteilerscheibe 14 gegenüber der Druckplatte 70 dienen in Einsenkungen 79 eingesetzte O-Ringe 80 bei innerhalb des Verschlussdeckels 81 anschlagend begrenztem Dichtkolben 7. Zur Stellungsanzeige der Verteilerscheibe 14 ist deren Umfang 82 mit Ziffern 1 bis 12 bedruckt, entsprechend den gleichartig bezeichneten Aus- und Eingängen $A_1$ bis $A_{12}$ und $X_1$ bis $X_{12}$ in Übereinstimmung mit den Durchgängen 11 und 17 in der Verteilerscheibe 14. Der Fortschalt-Antrieb der Verteilerscheibe 14 erfolgt durch das Kupplungsrohr 40 zum Schaltrad 29 und der damit verbundenen Herzkurve 44 zur Rückstellung. Die ganze Baugruppe bestehend aus Dichtkolben 7, Verteilerscheibe 14, Schaltrad 29 mit Herzkurve 44 lagert auf einer durchgehenden Welle 83 zur sicheren Zentrierung. Diese Welle 83 ist in der Seitenwand 84 ortsfest gelagert.

Als Luftverbindung vom Dichtkolben 7 zum Grundkörper 60 dienen die Leitungen 5 und 20. Der über die Kupplung 85 mit dem Verschlussdeckel 81 verbundene Anschluss führt in diesem direkt in den Zylinderraum 6 des Dichtkolbens 7, welcher im Verschlussdeckel 81 eingeformt ist. Die Leitung 8 führt aus dem Zylinderraum 6 als Bohrung in die äussere Ringnut 9, welche zur axialen Abdichtung gegen die Verteilerscheibe 14 Aussendichtungen 87 und Innendichtungen 88 aufweisen. Die weitere Luftverbindung vom Grundkörper 60 zur kleineren Ringnut 13a erfolgt über die Kupplung 86 und die Winkelbohrung 89 innerhalb des Dichtkolbens 7. Zwischen der Luftverbindung 5 einerseits und der Luftverbindung 20 andererseits ist ein Einstich 90 im Dichtkolben 7 mit Dichtkolbenring 91 zur Abdichtung des Zylinderraumes 6 vorgesehen.

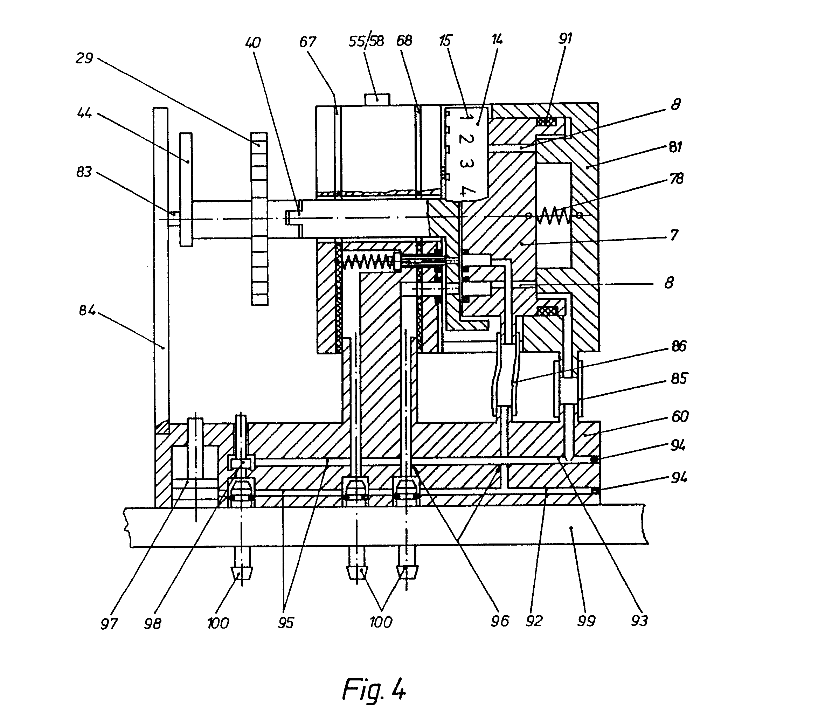

In der Fig. 4 sind weitere Luftleitungen in Form von Winkelbohrungen 92 und 93 sichtbar, die in bekannter Weise zur Fertigung durchgehend und nach aussen ausformbar sodann mittels eingepressten Kugel 94 abgedichtet sind. Diese Luftleitungen sind alle innerhalb des Grundkörpers 60 in mehreren Ebenen 95 und sich kreuzend 96 realisiert zur Verbindung von mehreren Zylindern 97 und Ventilen 98 entsprechend der Darstellung im Funktionsschaltbild Fig. 1. Dadurch werden sonst aufwendige Leitungsverbindungen mittels Luftschläuchen ausserhalb vermieden und die Luftweglänge zur Eigensteuerung auf ein Minimum reduziert. Ein Stecksockel 99 mit beweglich gelagerten Steckanschlüssen 100 erlauben einen schnellen Austausch des Schrittschalters bei belassener Verschlauchung der Aussenschaltung.

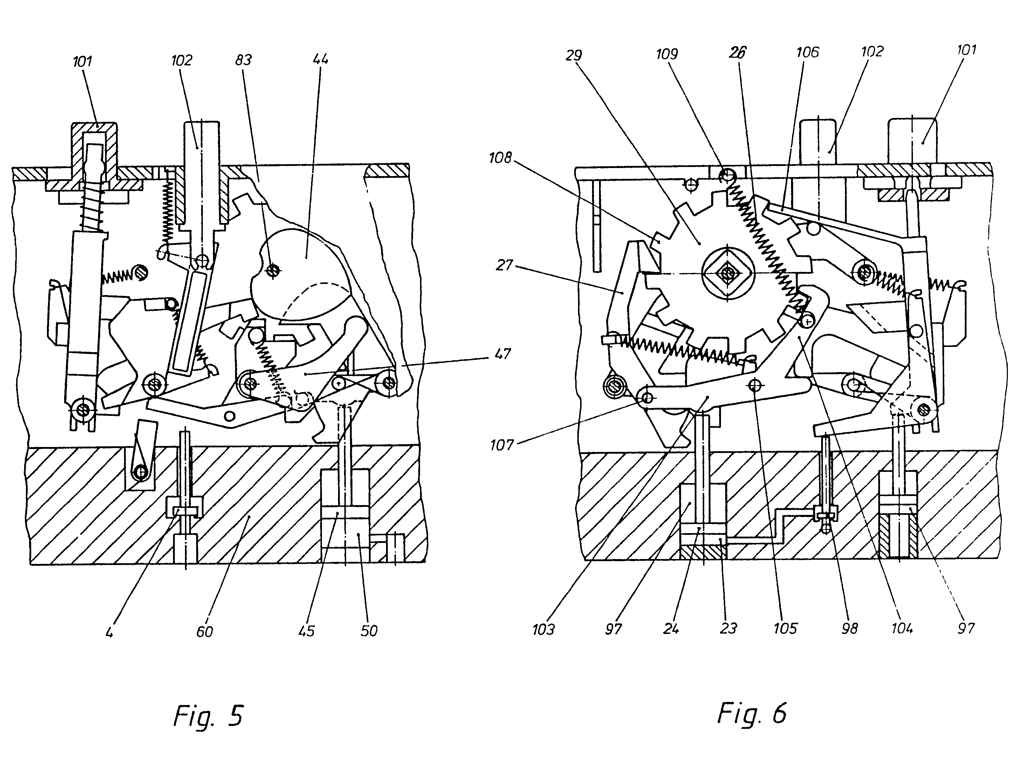

In Fig. 5 und 6 wird der wesentliche Teil der Hebelmechanik mit den Bedienteilen dargestellt, dabei ist ausgehend von der bisherigen Beschreibung ein Teil des Grundkörpers 60 mit dem Rückstellzylinder 50 und Kolben 45 und das Ventil 4 sichtbar. Der Wahlschalter 101 steuert über mehrere Hebel 102 und 103 u.a. deren an sich übliche Wirkungsweise nicht näher erläutert werden sollen, die Funktion Einrichten oder Betrieb.

In der dargestellten Stellung des Wahlschalters 101 auf «Einrichten» ist der Taster 102 in Funktion, so dass bei dessen Betätigung die Fortschaltmechanik, bestehend aus der Schaltklinke 27, dem Hebel 103 der einstückig mit dem Schleuderschutz 104 im Drehpunkt 105 lagert, verschwenkend das Schaltrad 29 weiterschaltet. Dabei wirkt die in dieser Stellung eingreifende Rastfeder 106 auf das Schaltrad 29 ein. In der anderen, nicht gezeigten Stellung «Betrieb» wirkt der Fortschaltkolben 24 auf den Hebel 103 und verschwenkt um den Drehpunkt 105, wodurch die im Drehpunkt 107 gelagerte Schaltklinke 27 über den Zahn 108 des Schaltrades 29 überrastet. Bei wieder entlüftetem Fortschaltzylinder 23 schaltet unter Wirkung der zwischen Schleuderschutz 104 und der Abdeckung 109 eingehängten Feder 26 das Schaltrad 29 weiter um einen Schaltschritt. Weitere nicht näher dargestellte Nocken und Hebel bewirken gegenseitige Verknüpfungen, Verriegelungen oder Funktionen um Beschädigungen bei Fehlbedienungen weitgehend auszuschalten und für folgerichtigen Funktionsablauf zu sorgen.

**Patentansprüche**

1. Pneumatische Schrittschalter mit von Signalen am Eingang abhängiger Umschaltung der Ausgänge (64), bestehend aus einem Grundkörper (60) mit einer Vielzahl von Ein- und Ausgängen (63, 64) für Strömungsmittel (Druckluft), welche über zugeordnete Kanäle (65) mit Verteilerkreisen (13) zur Auswahl jeweils eines ein- und ausgehenden Durchganges (11) eines in n-Stellung schaltbaren Verteilerkörpers in Form einer Verteilerscheibe (14) dienen, dadurch gekennzeichnet, dass sich im Grundkörper (60) teilweise offene Kanäle (65) befinden, die mit Druckplatten (69, 70) dicht verschlossen sind und der Grundkörper (60) durch Kugeln (94) verschlossene Winkelbohrungen (89) aufweist und dass der Verteilerscheibe (14), welche radiale Entlüftungsnuten für diejenigen Ausgänge aufweist, welche nicht mit der Sammelleitung in Verbindung geschaltet sind, ein Dichtkolben (7) folgt, welcher über die Verteilerscheibe (14) die in den eingehenden Durchgängen (72) eingebauten federbelasteten Ventilstössel (76) abhebt, ausgewählte Durchgänge verschliesst und im drucklosen Zustand von den Ventilfedern (75) abgehoben, die Verteilerscheibe (14) zur schrittweisen Weiterschaltung freigibt.

2. Pneumatischer Schrittschalter nach Anspruch 1, dadurch gekennzeichnet, dass die Verteilerscheibe (14) mit am Umfang (82) angebrachten Ziffern (15) für deren Stellungsanzeige versehen ist.

3. Pneumatischer Schrittschalter nach Anspruch 1 oder 2, dadurch gekennzeichnet, dass die offenen Kanäle (65) Dichtungswulste (66) aufweisen mit Entlüftungskanälen (72) an ihren Aussenkanten.

4. Pneumatischer Schrittschalter nach einem der Ansprüche 1 bis 3, dadurch gekennzeichnet, dass alle ein- und ausgehenden Durchgänge (72) zwischen der Druckplatte (70) und Verteilerscheibe (14) Dichtungsringe (79, 80) mit Entlüftungsrillen zur Axialdichtung aufweisen.

5. Pneumatischer Schrittschalter nach einem der vorhergehenden Ansprüche, dadurch gekennzeichnet, dass der Dichtungskolben (7) verteilerseitig zwei nebeneinanderliegende Ringnuten (9, 18) aufweist mit Dichtungsringen (87, 88) wovon die äussere Ringnut (9) mit Durchgängen (11, 17) zu einem Zylinderraum und die kleinere Ringnut (18) einen Durchgang über eine Winkelbohrung (89) aufweist jeweils mit Anschlussverbindung zu Ein- bzw. Ausgängen (5, 20) im Grundkörper (60).

6. Pneumatischer Schrittschalter nach Anspruch 5, dadurch gekennzeichnet, dass der Zylinderraum (6) beim Dichtungskolben (7) durch einen Verschlussdeckel (81) mit Versteifungsrippen gebildet ist.

7. Pneumatischer Schrittschalter nach einem der vorhergehenden Ansprüche, dadurch gekennzeichnet, dass die Ventilstössel (76) am profilierten Schaft (77) Längsnuten zum Luftdurchgang aufweisen mit Zwischenrippen zur Stösselführung.

8. Pneumatischer Schrittschalter nach einem der vorhergehenden Ansprüche, dadurch gekennzeichnet, dass in der Ein- und Ausgangssammelleitung (20, 5) Stösselanzeigen (55, 58) eingebaut sind für vorhandenen oder fehlenden Luftdruck zur Erkennung der Schaltsituation in Verbindung mit der Zifferanzeige (15) der Verteilerscheibe (14).

9. Pneumatischer Schrittschalter nach einem der vorhergehenden Ansprüche, dadurch gekennzeichnet, dass dem T-förmig gestalteten Grundkörper (60) mit Zu- und Ableitungen (61, 62) Hebel und Klinken zugeordnet sind, zur Fortschaltung, Bedienung und mechanischen Verknüpfung bei Hand- und Fernbetätigung für folgerichtigen Funktionsablauf.

10. Pneumatischer Schrittschalter nach einem der vorhergehenden Ansprüche, dadurch gekennzeichnet, dass zur schrittweisen Fortschaltung der Verteilerlscheibe (14) ein kolbenbetätigter Schaltarm mit Zugklinke (27) vorgesehen ist, dessen Feder (26) bei entlüftetem Kolben (24) schaltet und bei belüftetem Kolben (24) aufzieht.

11. Pneumatischer Schrittschalter nach Anspruch 10, dadurch gekennzeichnet, dass zur Nullstellung der Verteilerscheibe (14) über eine Herzkurve (44) ein kolbenbetätigter Nullstellarm (47) vorgesehen ist, wobei die Zugklinke (27) für die Fortschaltung der Veteilerscheibe (14) in einer eingriffsfreien Lage geschaltet ist.

12. Pneumatischer Schrittschalter nach einem der vorhergehenden Ansprüche, dadurch gekennzeichnet, dass alle Ein- und Ausgänge (61, 62) des Schrittschalters Ansatzbohrungen (63, 64) aufweisen, die zum Einstecken in ein mit Stecknippel für Schlauchanschlüsse (100) bestücktem Stecksockel (99) dienen, welcher mit Befestigungsmittel für Halteschienen versehen ist.

## Claims

1. A pneumatic stepping switch having outlets (64), which are switched in dependence on signals applied to the inlet, said switch comprising a body (60) provided with a multiplicity of inlets and outlets (63, 64) for fluid (compressed air), which inlets and outlets serve via associated passages (65) with distributing circuits (13) for a selection of one inlet passage and one outlet passage (11), which are formed in a distributing member that consists of a distributor disc, characterized in that the body (60) is formed with partly open passages (65), which are tightly sealed by pressure plates (69, 70), the body (60) has angle bores (89), which are closed by balls (94), the distributor disc (14) has radial vent grooves for those outlets which are not connected to communicate with the manifold and the distributor disc (14) is succeeded by a sealing piston (7), which by means of the distributor disc (14) lifts the spring-loaded valve tappets (76), which are installed in the inlet passages (72), said sealing piston also closes selected passages and when non-pressurized is lifted from the valve springs (75), and releases the distributor disc (14) for a stepping movement.

2. A pneumatic stepping switch according to claim 1, characterized in that the distributor disc (14) is provided on its periphery (82) with numerals (15) for indicating the position of the distributor disc.

3. A pneumatic stepping switch according to claim 1 or 2, characterized in that the open passages (75) are provided with sealing beads (66), which at their outer edges have vent passages (72).

4. A pneumatic stepping switch according to any of claims 1 to 3, characterized in that all inlet and outlet passages (72) between the pressure plate (70) and the distributor disc (14) are provided with sealing rings (79, 80), which effect an axial seal and are formed with vent grooves.

5. A pneumatic stepping switch according to any of the preceding claims, characterized in that the sealing piston (7) has two juxtaposed annular grooves (9, 18) at that end which faces the distributor, said annular grooves are provided with sealing rings (87, 88), the outer annular groove (9) communicates through passages (11, 17) with a cylinder chamber the smaller annular groove (18) communicates with a passage which comprises an angle bore (89), and said cylinder chamber and said angle bore communicate with inlets and outlets (5, 20) respectively, in the body (60).

6. A pneumatic stepping switch according to claim 5, characterized in that the cylinder chamber (6) at the sealing piston (7) is defined by a closing cover (81) formed with stiffening ribs.

7. A pneumatic stepping switch according to any of the preceding claims, characterized in that the valve tappets (76) are provided at their profiled stem (77) with longitudinal grooves for conducting air and with interposed ribs for guiding the tappet.

8. A pneumatic stepping switch according to any of the preceding claims, characterized in that tappet indicators (55, 58) are installed in the inlet and outlet manifolds (20, 5) and serve to indicate the presence or absence of air pressure so as to indicate the switched position in connection with the indicating numerals (15) on the distributing disc (14).

9. A pneumatic stepping switch according to any of the preceding claims, characterized in that the T-shaped body (60) is provided with feed and discharge lines (61, 62) and has levers and pawls associated with it, which serve for stepping, controlling and establishing mechanically interconnections for a logical sequence of operations under manual and remote control.

10. A pneumatic stepping switch according to any of the preceding claims, characterized in that a piston-actuated switch having a tension-biased claw (27) is provided for stepping the distributor disc (14) and has a spring (26), which switches when the piston (24) is vented and is wound up when the piston (24) is suplied with air.

11. A pneumatic stepping switch according to claim 10, characterized in that a piston-operated zero-setting arm (47) is provided for resetting the distributor disc (14) via a cardioid-shaped cam (44), and the tension-biased claw (27) is actuated to step the distributor disc (14) in a disengaged position.

12. A pneumatic stepping switch according to any of the preceding claims, characterized in that all inlets and outlets (61, 62) of the stepping switch are provided with extension bores (63, 64), which are adapted to be interfitted with a plug member (99), which is provided with plug nipples for hose fittings (100) and with fixing means for retaining rails.

## Revendications

1. Commutateur pneumatique pas à pas avec commutation des sorties (64) en fonction de signaux sur l'entrée, comprenant un corps de base (60) avec plusieurs entrées et sorties (63, 64) pour fluides (air comprimé) servant, à travers des canaux coordonnés (65) avec des circuits de distribution (13) à la sélection d'un passage d'entrée et de sortie (11) d'un élément de distribution sous forme de disque (14), caractérisé par le fait que dans le corps de base (60) se trouvent des canaux (65) en partie ouverts qui sont fermés de façon étanche par des plaques de pression (69, 70) et que le corps de base (60) est muni d'alésages angulaires (89) obturés par des billes (94) et qu'en aval du disque de distribution (14), contenant des rainures radiales de ventilation pour les sorties qui ne sont pas connectées sur la conduite collectrice, se trouve un piston d'étanchéité (7) qui décolle à travers le disque de distribution (14) les poussoirs de soupape (76) à charge de ressort incorporés dans les passages d'entrée (72), ferme des passages sélectionnés et, décollé des ressorts de soupape à l'état sans pression, débloque le disque de distribution (14) pour le prochain pas de commutation.

2. Commutateur pneumatique pas à pas selon la revendication 1, caractérisé par le fait que le disque de distribution (14) est muni de chiffres (15) sur la périphérie (82) pour l'indication de position.

3. Commutateur pneumatique pas à pas selon la revendication 1 ou 2, caractérisé par le fait que les canaux ouverts (65) sont munis de bourrelets d'étanchéité (66) avec des canaux de ventilation (72) sur leurs faces extérieures.

4. Commutateur pneumatique pas à pas selon l'une des revendications 1 à 3, caractérisé par le fait que tous les passages d'entrée et de sortie (72) sont munis entre les plaques de pression (70) et le disque de distribution (14) de rondelles d'étanchéité (79, 80) avec des fentes de ventilation vers la garniture axiale.

5. Commutateur pneumatique pas à pas selon l'une des revendications ci-dessus, caractérisé par le fait que le piston d'étanchéité (7) est muni du côté distribution de deux rainures annulaires (9, 18) avec des bagues d'étanchéité (87, 88), la rainure extérieure (9) présentant des passages (11, 17) vers un espace cylindrique et la rainure plus petite (18) un passage à travers un alésage angulaire (89) avec chacun un raccordement vers des entrées et sorties (5, 20) dans le corps de base (60).

6. Commutateur pneumatique pas à pas selon la revendication 5, caractérisé par le fait que l'espace cylindrique (6) près du piston d'étanchéité (7) est formé par un couvercle de fermeture (81) avec des nervures raidisseuses.

7. Commutateur pneumatique pas à pas selon l'une des revendications ci-dessus, caractérisé par le fait que les poussoirs (76) sur la tige profilée (77) sont munis de rainures longitudinales pour le passage d'air avec des nervures intermédiaires pour le guidage des poussoirs.

8. Commutateur pneumatique pas à pas selon l'une des revendications ci-dessus, caractérisé par le fait que dans la conduite collectrice d'entrée et de sortie (20, 5) sont incorporés des indicateurs de poussoir (55, 58) pour l'air comprimé disponible ou manquant pour la reconnaissance de l'état de commutation en coordination avec l'indication numérique (15) du disque de distribution (14).

9. Commutateur pneumatique pas à pas selon l'une des revendications ci-dessus, caractérisé par le fait que des leviers et des poignets sont coordonnés au corps de base (60) en forme de T avec des conduites d'amenée et de dérivation (61, 62) pour la commutation, le maniement et la connexion mécanique lors d'actionnement manuel et par télécommande pour assurer un fonctionnement logique.

10. Commutateur pneumatique pas à pas selon l'une des revendications précédentes, caractérisé par le fait qu'un bras de commutation avec poignée-tirette (27) actionné par piston et prévu pour la commutation pas à pas du disque de distribution (14), bras dont le ressort (26) commute si le piston (24) est desserré et remonte si le piston est serré.

11. Commutateur pneumatique pas à pas selon la revendication 10, caractérisé par le fait qu'un bras de mise à zéro est prévu pour la mise à zéro du disque de distribution (14) à travers une cardioïde (44), la poignée-tirette (27) pour la commutation du disque de distribution (14) étant placé dans une position libre.

12. Commutateur pneumatique pas à pas selon l'une des revendications précédentes, caractérisé par le fait que toutes les entrées et sorties (61, 62) du commutateur pas à pas sont munies d'alésages (63, 64) servant à la fixation du socle (99) muni de nipples pour les raccords de tuyaux (100), socle étant muni également d'éléments de fixation pour rails supports.

*Fig. 1*

0 134 486

Fig. 3

Fig. 2

Fig. 4

Fig. 6

Fig. 5